# EUROPEAN PATENT SPECIFICATION

(11) **EP 1 120 591 B1**
(45) Date of publication and mention of the grant of the patent: **12.01.2005**
(21) Application number: 01101189.7
(22) Date of filing: 24.01.2001
(51) Int. Cl.: F16K 7/00

(54) **Diaphragm for adjusting the useful passage area in submersed devices for oxygenating tanks for collecting storm sewage and wastewater**
Membran zum Justieren vom Durchlass in einem sinkbarem Gerät für Sauerstoffbehälter zur Sammlung von Sturmabwasser
Membrane pour ajuster le passage dans un dispositif immergé pour un réservoir d'oxygène pour collecter des eaux d'égouts et d'orage

(30) Priority: 27.01.2000 IT MO000005 U
(43) Date of publication of application: 01.08.2001
(73) Proprietor: Zenit S.p.A., 41018 San Cesario Sul Panaro (Modena) (IT)
(72) Inventor: Bottan, Davide, 41100 Modena (IT)
(74) Representative: Modiano, Guido, Dr.-Ing.

(56) References cited:
- EP-A- 0 302 708
- WO-A-90/05583
- US-A- 4 157 304
- US-A- 4 210 534

## Description

The present invention relates to a diaphragm for adjusting the useful passage area in submersed devices for oxygenating tanks for collecting storm sewage and wastewater.

As it is known, tanks used to collect storm sewage and wastewater require constant oxygenation in order to eliminate their bacterial content.

This devices used, essentially consist of a water feed pipe which is fitted at the delivery of a pump and is provided with a Venturi tube narrowing in a preset section.

Directly downstream of said narrowing there is provided the blended inlet of a second pipe which is adapted to supply air.

The pressure drop produced by the Venturi effect, accordingly causes spontaneous suction of air from outside which supplies said oxygenation.

Such a narrowing is obtained by inserting in the preset section a rigid diaphragm which has a calibrated diameter and reduces the useful passage area of the water feed pipe.

Such diaphragm is currently installed by interposing it between the coupling flanges of the water pipe and the delivery of the pump, forcing it by pushing into a seat which is machined beforehand or using locking screws in order to retain it.

The entire device is then constantly submersed in tanks in which it produces said oxygenation.

A liquid-gas mixing device is known from the publication WO90/05583. This document represents the closest prior art and corresponds to the preamble of claim 1.

This prior art suffers from a severe drawback: when it is necessary to act on the diaphragm for ordinary periodic maintenance or to replace it completely with another one having a different useful area it is necessary to completely disassemble the pipe from the pump and then reassemble it each time; these operations often entail difficulties due to the permanent immersion of the entire device in aggressive liquid.

The aim of the present invention is to solve the above problems of the conventional art by providing a diaphragm for adjusting the useful passage area in submersed devices for oxygenating tanks for collecting storm sewage and wastewater which allows to perform easy maintenance or, if necessary, fully replace it rapidly and without difficulty even after a long period of submersion.

This aim and this and other objects are achieved by a diaphragm for adjusting the useful passage area in submersed devices for oxygenating tanks for collecting storm sewage and wastewater, said devices comprising a water feed pipe which is coupled to the delivery of a pumping element and a branch pipe for feeding air which is inserted downstream of a narrower, Venturi tube section, characterized in that it consists of a contoured plate which is crossed by a port with a calibrated diameter which is smaller than the diameter of said feed pipe and can be hermetically inserted in a drawer-like fashion in a corresponding slot provided transversely in said water feed pipe directly upstream of the insertion point of said branch pipe.

Further characteristics and advantages will become better apparent from the description of a preferred embodiment of a diaphragm for adjusting the useful passage area in submersed devices for oxygenating tanks for collecting storm sewage and wastewater, illustrated only by way of non-limitative example in the accompanying drawings, wherein:
Figure 1 is a partially sectional side view of a portion of a device for oxygenating tanks for collecting storm sewage and wastewater, to which the diaphragm according to the invention is applied;
Figure 2 is a corresponding transverse sectional view thereof, taken along the line II-II of Figure 1;
Figure 3 is a highly enlarged-scale view of the diaphragm according to the invention;
Figure 4 is a corresponding sectional view thereof, taken along a longitudinal plane.

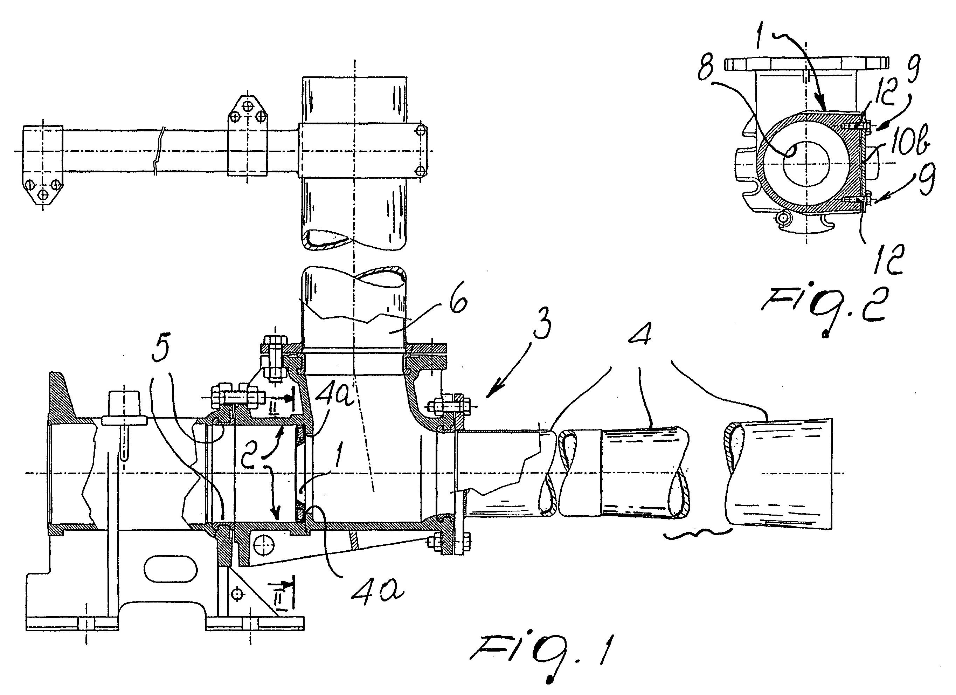

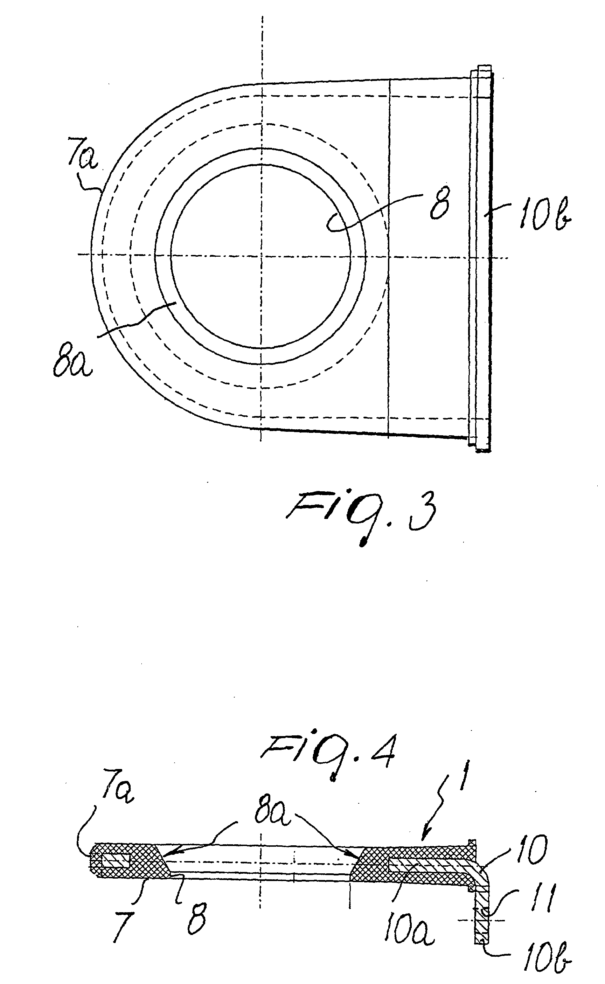

With reference to the figures, 1 designates a diaphragm for adjusting the useful passage area 2 in submersed devices 3 for oxygenating tanks for collecting storm sewage and wastewater (not shown for the sake of simplicity).

Said devices 3 usually comprise a water feed pipe 4, which is usually but not necessarily coupled directly to the delivery 5 of a pumping element (also not shown for the sake of simplicity), and a branch pipe 6 for feeding air, which is inserted downstream of a narrower Venturi tube section.

The diaphragm 1 consists of a contoured plate 7 which is crossed by a port 8 with a calibrated diameter which is smaller than the diameter of the passage area 2 and can be inserted in a drawer-like fashion and hermetically in a corresponding slot 4a provided transversely in said water feed pipe 4, directly upstream of the insertion point of the branch pipe 6.

The longitudinal cross-section of the plate 7 is wedge-shaped in order to achieve hermetic coupling to the edges of said slot 4a as insertion proceeds, and the plate 7, for this purpose, is made of elastomeric material.

The port 8 has a flaring 8a which diverges towards the insertion point of the branch pipe 6 and its diameter can be preset, i.e. plates with ports 8 having different diameters are provided and can be used according to requirements.

The diaphragm 1 also has means 9 for coupling to the feed pipe 4 which are constituted by a bracket 10 being folded so as to be L-shaped and having an end 10a which is longitudinally embedded in the solid body of the plate 7 and an opposite end 10b which protrudes at right angles to it and is crossed by holes 11 for the passage of screws 12 or the like which can engage in corresponding threaded seats, not shown, being formed correspondingly in the feed pipe 4.

Finally, the end of the plate 7 that is adapted for insertion in said slot has a rounded and chamfered profile 7a, while the opposite end, in which the end 10a of the bracket 10 is inserted, is straight.

Use of the invention is self-evident: the diaphragm 1 is inserted by making it slide in the slot 4a formed in the pipe 4.

The wedge-shaped cross-section of the plate 7 that constitutes the diaphragm 1, and the elastomeric material of which it is made, allow to obtain, once insertion is completed, a hermetic seal between said plate 7 and the walls of the slot 4a.

Each plate is provided beforehand with a port 8 which has a preset diameter, producing a range of diaphragms 1 to be used according to the flow-rate requirements.

The plate 7, once insertion is completed, is rigidly coupled to the water feed pipe 4 by clamping thereon, by means of screws 12, the end 10b, which is advantageously bent for this purpose.

When it is necessary to replace the diaphragm 1 either for maintenance or due to changes in flow-rate requirements, the device 3 is brought to the surface from its submersed position in the water collection tank, the screws 12 are unscrewed and, by pulling the bracket 10, the plate 7 is extracted from the slot 4a in which a new plate 7 provided with a suitable port 8 is inserted and locked as described above.

The ports 8 are provided with a flaring 8a which is directed towards the outlet of the pipe 4 in order to facilitate the outflow of the water and trigger more easily the Venturi effect and the consequent suction of oxygenation air from the branch pipe 6.

In practice it has been found that the described invention achieves the intended aim, since it allows to provide easy maintenance or, if necessary, complete replacement of the diaphragm 1 rapidly and without difficulty even after prolonged submersion.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A diaphragm for adjusting the useful passage area in submersed devices for oxygenating tanks for collecting storm sewage and wastewater, said devices (3) comprising a water feed pipe (4) which is coupled to the delivery (5) of a pumping element and a branch pipe (6) for feeding air which is inserted downstream of a narrower Venturi tube section (1), **characterized in that** it consists of a contoured plate (7) which is crossed by a port (8) with a calibrated diameter which is smaller than the diameter of said feed pipe (4) and can be hermetically inserted in a drawer-like fashion in a corresponding slot (4a) formed transversely in said water feed pipe (4), directly upstream of the insertion point of said branch pipe (6).

2. The diaphragm according to claim 1, **characterized in that** it has a wedge-shaped longitudinal cross-section for hermetic coupling to the edges of said slot (4a).

3. The diaphragm according to the preceding claims, **characterized in that** it is made of elastomeric material.

4. The diaphragm according to claim 1, **characterized in that** said port (8) has a flaring (8a) which diverges towards the insertion point of said branch pipe (6).

5. The diaphragm according to the preceding claims, **characterized in that** said port (8) has a presettable diameter.

6. The diaphragm according to the preceding claims, **characterized in that** it is provided with means (9) for coupling to said water feed pipe (4).

7. The diaphragm according to claim 6, **characterized in that** said coupling means (9) are constituted by a bracket (10) which is folded in an L-shape and has an end (10a) which is embedded longitudinally in the solid body of said plate (7) and an opposite end (10b) which protrudes at right angles thereto and is crossed by passage holes (11) for screws (12) and the like which can engage in corresponding threaded seats formed correspondingly in said feed pipe (4).

8. The diaphragm according to the preceding claims, **characterized in that** the end of said plate (7) that is adapted for insertion in said slot (4a) has a rounded and chamfered profile (7a), the opposite end, adapted for the insertion of said bracket, being straight.

## Patentansprüche

1. Membran zum Justieren des Durchlasses in einem sinkbaren Gerät für Sauerstoffbehälter zur Sammlung von Sturmabwasser, wobei das Gerät (3) folgendes besitzt: ein Wasserzufuhrrohr (4), das mit der Förderung (5) eines Pumpenelementes und einem Zweigrohr (6) für die Luftzufuhr verbunden ist, das nach einem schmaleren Venturirohrabschnitt (1) eingeschoben wird, **dadurch gekennzeichnet, dass** sie aus einer geformten Platte (7) besteht, die von einem Stutzen (8) mit einem geeichten Durchmesser durchkreuzt wird, der kleiner ist als der Durchmesser des Zuführrohres (4) und wie eine Schublade hermetisch in einen entsprechenden Schlitz (4a) eingeschoben werden kann, der quer in dem Wasserzufuhrrohr (4) direkt vor der Einschubstelle des Zweigrohres (6) gebildet wird.

2. Membran nach Anspruch 1, **dadurch gekennzeichnet, dass** sie für die hermetische Verbindung mit den Rändern des Schlitzes (4a) einen keilförmigen, längsverlaufenden Querschnitt besitzt.

3. Membran nach den vorhergehenden Ansprüchen, **dadurch gekennzeichnet, dass** sie aus einem elastischen Polymer besteht.

4. Membran nach Anspruch 1, **dadurch gekennzeichnet, dass** der Stutzen (8) eine Aufweitung (8a) aufweist, die in Richtung der Einschubstelle des Zweigrohres (6) auseinandergeht.

5. Membran nach den vorhergehenden Ansprüchen, **dadurch gekennzeichnet, dass** der Stutzen (8) einen voreinstellbaren Durchmesser besitzt.

6. Membran nach den vorhergehenden Ansprüchen, **dadurch gekennzeichnet, dass** sie mit Elementen (9) zur Verbindung mit dem Wasserzufuhrrohr (4) versehen ist.

7. Membran nach Anspruch 6, **dadurch gekennzeichnet, dass** die Verbindungselemente (9) aus einem L-formigen Bügel (10) bestehen, der mit dem einem Ende (10a) längs in den massiven Hauptteil der Platte (7) eingelassen ist, und dessen gegenüberliegendes Ende (10b) im rechten Winkel dazu heraussteht und von Durchlasslöchern (11) für Schrauben (12) und dergleichen durchkreuzt wird, welche in entsprechende Schraubsitze eingreifen können, die entsprechend im Zufuhrrohr (4) gebildet werden.

8. Membran nach den vorhergehenden Ansprüchen, **dadurch gekennzeichnet, dass** das Ende der Platte (7), das in den Schlitz (4a) eingeschoben werden soll, ein abgerundetes und abgeschrägtes Profil (7a) besitzt, während das gegenüberliegende Ende, in das die Bügel eingeschoben werden, gerade ist.

## Revendications

1. Membrane pour ajuster la zone de passage utile dans des dispositifs immergés pour des réservoirs d'oxygène pour collecter des eaux d'égout et d'orage, lesdits dispositifs (3) comprenant un tuyau d'alimentation en eau (4) qui est couplé à l'alimentation (5) d'un élément de pompage et un tuyau de raccordement (6) afin d'amener l'air qui est inséré en aval d'une section plus étroite de tube Venturi (1), **caractérisée en ce qu'**elle est constituée d'une plaque profilée (7) qui est traversée par un orifice (8) doté d'un diamètre calibré qui est inférieur au diamètre dudit tuyau d'alimentation (4) et qui peut être insérée hermétiquement à la manière d'un tiroir dans une encoche correspondante (4a) formée de manière transversale dans ledit tuyau d'alimentation en eau (4) directement en amont du point d'insertion dudit tuyau de raccordement (6).

2. Membrane selon la revendication 1, **caractérisée en ce qu'**elle comprend une coupe transversale longitudinale cunéiforme pour un couplage hermétique avec les bords de ladite encoche (4a).

3. Membrane selon les revendications précédentes, **caractérisée en ce qu'**elle est constituée d'un matériau élastomère.

4. Membrane selon la revendication 1, **caractérisée en ce que** ledit orifice (8) comprend un évasement (8a) qui diverge vers le point d'insertion dudit tuyau de raccordement (6).

5. Membrane selon les revendications précédentes, **caractérisée en ce que** ledit orifice (8) comprend un diamètre pouvant être préalablement réglé.

6. Membrane selon les revendications précédentes, **caractérisée en ce qu'**elle est dotée de moyens (9) pour le couplage avec ledit tuyau d'alimentation en eau (4).

7. Membrane selon la revendication 6, **caractérisée en ce que** lesdits moyens de couplage (9) sont constitués par une équerre(10) qui est pliée selon une forme en L et qui comprend une extrémité (10a) qui est encastrée longitudinalement dans le corps solide de ladite plaque (7) et une extrémité opposée (10b) qui fait saillie à angles droits par rapport celui-ci et qui est traversée par des cavités de passage (11) destinées à des vis (12) et semblables qui peuvent s'engager dans des sièges filetés formés de manière correspondante dans ledit tuyau d'alimentation (4).

8. Membrane selon les revendications précédentes, **caractérisée en ce que** l'extrémité de ladite plaque (7) qui est adaptée pour être insérée dans ladite encoche (4a), comprend un profil arrondi et chanfreiné (7a), l'extrémité opposée, adaptée pour l'insertion de ladite équerre, étant droite.
